# EUROPÄISCHE PATENTSCHRIFT

(11) **EP 0 827 579 B1**
(45) Veröffentlichungstag und Bekanntmachung des Hinweises auf die Patenterteilung: **18.08.1999**
(21) Anmeldenummer: 96919564.3
(22) Anmeldetag: 22.05.1996
(51) Int. Cl.: F16J 1/14

(54) **KOLBEN MIT PLEUELSTANGE**
PISTON WITH CONNECTING ROD
PISTON POURVU D'UNE TIGE APPROPRIEE

(30) Priorität: 23.05.1995 DE 19518875
(43) Veröffentlichungstag der Anmeldung: 11.03.1998
(73) Patentinhaber: Wanzke, Lothar, 63843 Niedernberg (DE)
(72) Erfinder: Wanzke, Lothar, 63843 Niedernberg (DE)
(74) Vertreter: Pöhner, Wilfried Anton, Dr.
(86) Internationale Anmeldenummer: DE9600892
(87) Internationale Veröffentlichungsnummer: WO9637719

(56) Entgegenhaltungen:
- US-A- 3 564 978
- US-A- 3 765 307

## Beschreibung

Die Erfindung bezieht sich auf einen Kolben, Kolben, der in einem Arbeitszylinder axial beweglich ist, mit einer Pleuelstange, die senkrecht zur Achse des Arbeitszylinders drehbar am Kolben befestigt ist, wobei der Kolben eine Aussparung in Gestalt eines endseitig offenen, runden Hohlzylinders aufweist, dessen Zylinderachse senkrecht zur Bewegungsrichtung des Kolbens ausgerichtet ist und der auf der der Pleuelstange zugewandten Seite über einen axialen Spalt durchgehend offen ist, wobei der Durchmesser dieser Seitlichen Öffnung, d.h. die Spaltbreite, kleiner als der Durchmesser des Hohlzylinders ist, die Pleuelstange kolbenseitig in einem starr mit ihr verbundenen, runden Zylinder endet, dessen Durchmesser zwischen dem Innendurchmesser des Hohlzylinders und dem Durchmesser seiner seitlichen Öffnung liegt und der bei paralleler Ausrichtung der Zylinderachsen zueinander in diesen eingeschoben ist, wobei die Pleuelstange die seitliche Öffnung des Hohlzylinders durchgreift und der Durchmesser der Pleuelstange im Anschluß an den Zylinder kleiner als der Durchmesser der seitlichen Öffnung des Hohlzylinders ist.

Kolben, die in einem Arbeitszylinder axial beweglich sind, werden auf den verschiedensten technischen Gebieten eingesetzt. Dabei wird entweder der Kolben durch ein im Zylinder befindliches Medium bewegt, d.h. der Zylinder ist Bestandteil eines Motors, oder der Kolben dient seinerseits dazu, an dem im Zylinder befindlichen Medium Arbeit zu verrichten. Letzteres ist bei einer Pumpe oder Kompressoren der Fall, wie sie beispielsweise in Kühlschränken oder Klimageräten weite Verwendung finden. In allen Fällen ist die Bewegung des Kolbens mit der Bewegung weiterer mechanischer Elemente gekoppelt, die zur Bereitstellung der dazu notwendigen oder der Nutzung der im Zylinder freigesetzten Energie dienen. In der Regel wird die axiale Bewegung des Kolbens dabei in die Drehbewegung einer Kurbelwelle umgesetzt oder durch sie bewirkt. Die Verbindung des Kolbens mit der Kurbelwelle erfolgt über eine Pleuelstange, die insbesondere Schubkräfte, im Rahmen der Ansaugtakte eines Motors oder einer Pumpe aber auch Zugkräfte aufnehmen muß, und an die weiterhin die Anforderung der Beweglichkeit um eine senkrecht der Zylinderachse verlaufende Drehachse besteht, damit sie den Auslenkungen der Kurbelwelle folgen kann.

Aus diesem Grunde erfolgt die Befestigung der Pleuelstange am Kolben im Stande der Technik über einen Bolzen, der in einer senkrecht der Zylinderachse verlaufenden Bohrung des Kolbens festgelegt ist und die Pleuelstange in einer nahe ihrem Ende befindlichen Öffnung durchgreift. Dabei ist die Pleuelstange in einem gewissen Winkelbereich um die durch den Bolzen gegebene Achse drehbar und kann sowohl Druck- als auch Zugbelastungen ausüben oder aufnehmen. Die Herstellung von Kolben, Pleuelstange und Bolzen ist jedoch aufwendig, insbesondere im Hinblick auf die vielfach hohen thermischen und mechanischen Belastungen, denen die Bauelemente im Betrieb ausgesetzt sind, und hat mit hoher Präzision zu erfolgen. Dies gilt sowohl für die Verbindung zwischen Kolben und Bolzen als auch die Befestigung der Pleuelstange am letzteren. Dabei ist insbesondere eine sorgfältige Einstellung des für die Beweglichkeit notwendigen Spiels vorzunehmen, da ein zu geringes Spiel die Gefahr eines Festfressens des entsprechenden Lagers mit nachfolgender Zerstörung beinhaltet, während ein zu großes Spiel zu vorzeitigem Verschleiß führt.

Bei einer Anordnung gemäß der US 3 765 307 weist der Kolben eine Aussparung auf, die die Gestalt eines endseitig offenen, runden Hohlzylinders hat, dessen Zylinderachse senkrecht zur Bewegungsrichtung des Kolbens verläuft. Hierbei kann es sich sowohl um eine durchgehende, d.h. beidseitig offene, als auch um eine einseitig offene Aussparung handeln. Auf der der Pleuelstange zugewandten Seite weist sie eine durchgehende Öffnung in Gestalt eines breiten Spaltes auf, dessen Durchmesser kleiner als der des Hohlzylinders ist. Die Pleuelstange endet kolbenseitig in einem starr mit ihr verbundenen runden Zylinder, dessen Querschnitt dem Innendurchmesser des Hohlzylinders in der Weise entspricht, daß er geringfügig kleiner ist und sich in paralleler Ausrichtung der Zylinderachsen in die Aussparung einschieben läßt. Dabei ist der Durchmesser des endseitigen Zylinders der Pleuelstange so groß zu wählen, daß er weder durch die seitliche Öffnung des Hohlzylinders herausgleitet, noch ein größeres Spiel zwischen beiden Zylindern besteht, das im Dauerbetrieb zu einer Beschädigung von Pleuelstange und/oder Kolben führen würde. Andererseits ist ein hinreichendes Spiel erforderlich, damit eine Drehbarkeit der Pleuelstange um die Achse des Zylinders möglich ist und auch bei betriebsbedingten Temperaturschwankungen erhalten bleibt. Ist die Pleuelstange in dieser Weise in den Kolben eingeschoben, so durchgreift sie die seitliche Öffnung des Hohlzylinders, wobei die Drehbarkeit in der Weise gewährleistet wird, daß der Durchgriff beabstandet erfolgt. Zu diesem Zweck ist der Durchmesser der Pleuelstange im Anschluß an den endseitigen Zylinder kleiner als die Breite der Öffnung des Hohlzylinders. Die Öffnung des Hohlzylinders erweitert sich mit zunehmendem Abstand von der Zylinderachse, also keilförmig erweitert, so daß sie die Beweglichkeit der Pleuelstange in geringerem Maße einschränkt als eine Öffnung konstanter Breite.

Davon ausgehend hat sich die Erfindung zur Aufgabe gestellt, einen Kolben mit einer Pleuelstange zu entwickeln, deren Befestigung aneinander ohne einen Bolzen erfolgt, so daß sich die Herstellung wesentlich vereinfacht und preisgünstig möglich ist.

Diese Aufgabe wird erfindungsgemäß dadurch gelöst, daß der Querschnitt von Kolben und Arbeitszylinder näherungsweise rechteckig ist.

Kolben und Arbeitszylinder sind von rechteckigem Querschnitt, wobei auch geringe Abweichungen von dieser Gestalt, wie ein Rechteck mit abgerundeten Ecken, möglich sind. Diese Querschnittsform erlaubt die Herstellung von Kolben und Arbeitszylinder durch einfache und kostengünstige Stanzverfahren. Auf diese Art lassen sich mehrere Kolben in wesentlich kompakterer Weise anordnen, als es bei kreisförmigem Querschnitt erreichbar wäre. Vorteilhaft sind insbesondere Gestalten in Form langgestreckter Rechtecke, die eine Breit- und eine Schmalseite aufweisen, wobei benachbarte Arbeitszylinder mit ihren Breitseiten einander zugeordnet sind. Damit ist die Länge einer Kurbelwelle bei vorgegebenem Arbeitsvolumen minimierbar und die Kolbenanordnung von sehr platzsparendem Aufbau.

Der vorgeschlagene Kolben mit Pleuelstange erfüllt in bezug auf Ausübung und Aufnahme von Druck- und Zugkräften sowie die Drehbarkeit der Pleuelstange senkrecht zur Kolbenachse alle Anforderungen, die für einen störungsfreien Betrieb unter den unterschiedlichsten Bedingungen notwendig sind. Im Gegensatz zu einem herkömmlichen Kolben ist die Herstellung jedoch wesentlich einfacher, da nur zwei Teile zusammenzufügen sind und der verbindende Bolzen entfällt. Seine Funktion wird durch den endseitigen Zylinder der Pleuelstange übernommen, der sich in einem Arbeitsschritt mit dieser fertigen läßt, so daß sich die entsprechenden Kosten erheblich reduzieren. Weiterhin ist lediglich eine exakte endseitige Passung der Pleuelstange im Kolben erforderlich, während bei einem herkömmlichen Kolben mit Pleuelstange sowohl die Lager zwischen Pleuelstange und Bolzen als auch zwischen Bolzen und Kolben mit höchster Präzision zu fertigen sind.

Bevorzugte Werkstoffe für die Herstellung von Kolben und/oder Pleuelstange sind Kunststoff, Metall und/oder keramische Materialien, die sich einzelnen oder auch in Kombination einsetzen lassen. Geeignete Beispiele sind beschichtete Metallteile, die Verwendung von Verbundwerkstoffen, wie etwa faserverstärkten Kunststoffen, oder die Herstellung von Kolben oder Pleuelstange aus unterschiedlichen Materialien. Die Auswahl des Materials hat im Hinblick auf den Verwendungzweck zu erfolgen, wobei sich Metalle und Keramik insbesondere für die thermisch belasteten Teile eines Verbrennungsmotors anbieten, wohingegen leichtere Kunststoffteile den energiesparenden Betrieb einer Pumpe ermöglichen.

Durch den seitlich offenen Hohlzylinder wird der Kolben in zwei Hälften unterteilt, die nur auf der dem Zylinder zugewandten Seite miteinander verbunden sind, so daß die Stabilität im Vergleich zu Kolben herkömmlicher Bauart geringfügig vermindert ist. Erfordert der Einsatzweck eine besondere Präzision der Ausführung oder eine hohe Stabilität zur Aufnahme extremer Belastungen, ist es vorteilhaft, die Ränder der Öffnung miteinander durch eine oder mehrere Klammern zu verbinden. Auf diese Weise wird die Stabilität des Kolbens wesentlich erhöht, wobei die Verbindung senkrecht der Achse des Hohlzylinders erfolgt, um eine optimale Aufnahme der abzufangenden Kräfte zu gewährleisten und die Bewegung der Pleuelstange nicht zu behindern. Neben Klammern, die die Ränder der Öffnung unter einer Zugspannung miteinander verbinden, lassen sich bolzenartige Klammern verwenden, die auch zur Aufnahme von Druckkräften geeignet sind.

Der Verschleiß von Pleuelstange und Kolben läßt sich vermindern, wenn ihre Kontaktfläche mit einem Gleitbelag versehen ist, der auf der Oberfläche eines oder beider Bauteile aufgebracht ist. Die Ausführung des Gleitbelages richtet sich nach dem Einsatzzweck des Kolbens und dem verwendeten Schmiermittel, wobei für mechanisch und thermisch gering belastete Ausführungen auch die Möglichkeit von Trockenlagern gegeben ist. Ebenso ist es möglich, die Kontaktfläche des Kolbens zur Zylinderwand mit einem Gleitmaterial zur Trockenlagerung, etwa einem Kunststoff oder Kunstkohle, zu beaufschlagen

Die Produktion des Kolbens mit Pleuelstange kann unter Berücksichtigung der notwendigen Qualitätsanforderungen nach einem geeigneten, kostengünstigen Verfahren erfolgen. Zweckmäßig ist z.B. die Herstellung durch Spritzgießen, Schmieden, Fließpressen oder Räumen mit einer Räumnadel. Bei kleinen und flachen Elementen ist eine preiswerte Herstellung durch Stanzen zweckmäßig.

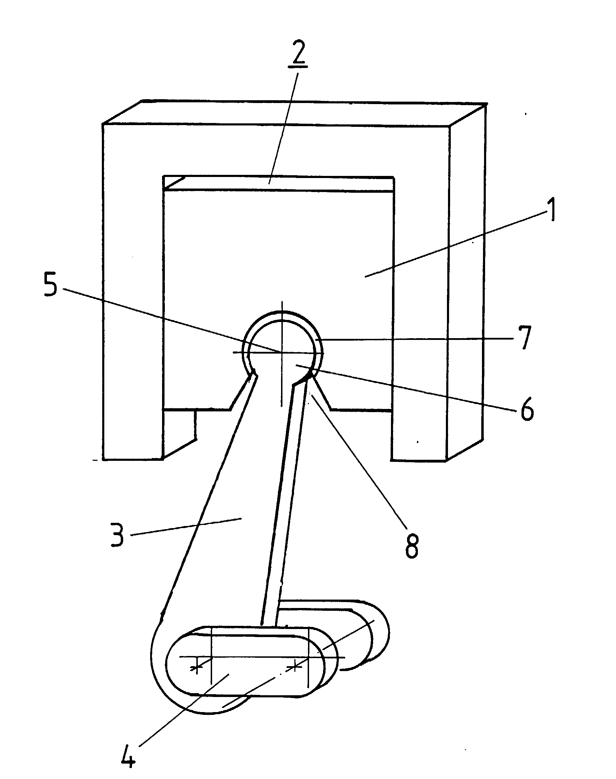

Weitere Einzelheiten, Merkmale und Vorteile der Erfindung lassen sich dem nachfolgenden Beschreibungsteil entnehmen, in dem anhand der Zeichnung ein Ausführungsbeispiel der Erfindung näher erläutert wird. Die Zeichnung zeigt in prinzipienhafter Darstellung den Querschnitt durch einen erfindungsgemäßen Kolben mit Pleuelstange.

Der vorgeschlagene Kolben (1) ist in einem Arbeitszylinder (2) axial beweglich, wobei seine Bewegung über eine Pleuelstange (3) mit der Rotation einer Kurbelwelle (4) gekoppelt ist. Daher ist es erforderlich, daß die drehbar an der Kurbelwelle (4) befestigte Pleuelstange (3) nicht nur axiale Zug- und Schubkräfte aufnimmt, sondern auch den senkrecht dazu erfolgenden Bewegungskomponenten der Kurbelwelle (4) folgt. Zu diesem Zweck ist die Pleuelstange (3) in einem Winkelbereich um die Achse (5) drehbar, der endseitig durch die Berührung des Kolbens (1) begrenzt wird. Die Verbindung zwischen Pleuelstange (3) und Kurbelwelle (4) ist im Sinne der Erfindung beliebig und kann sowohl durch eine zweiteilige Pleuelstange erfolgen, deren Teile, die Kurbelwelle umschließend, miteinander verbunden sind, als auch durch eine einteilige, in einem Ring endende Pleuelstange, die auf die Kurbelwelle aufgeschoben ist.

Zur Verbindung mit dem Kolben (1) weist die Pleuelstange (3) endseitig einen runden Zylinder (6) auf, der starr mit ihr verbunden ist. Der Kolben (1) ist auf seiner Unterseite mit einer Aussparung (7) versehen, die die Gestalt eines endseitig offenen Hohlzylinders hat, in den eine seitliche Öffnung (8) in Form eines breiten durchgehenden Spaltes eingebracht ist. Entsprechend läßt sich der endseitige Zylinder (6) der Pleuelstange (3) in Richtung der Achse (5) in die Aussparung (7) des Kolbens (1) einschieben, wobei die Pleuelstange (3) die seitliche Öffnung (8) durchgreift. Dabei sind die Abmessungen von Pleuelstange (3) mit Zylinder (6) sowie der Aussparung (7) mit Öffnung (8) so zu wählen, daß die Pleuelstange (3) in einem hinreichend großen Winkel um die Achse (5) drehbar ist und der Bewegung der Kurbelwelle (4) folgen kann. Zu diesem Zweck erfolgt der Durchgriff durch die Öffnung (8), die sich bevorzugt in Richtung auf die Kurbelwelle (4) zu erweitert, beabstandet, d.h. die Pleuelstange (3) liegt allenfalls in den seitlichen Extremlagen bei Bewegung der Kurbelwelle (4) an den Begrenzungen der Aussparung (7) an. Ein geringes Spiel zwischen Zylinder (6) und den Wandungen der Aussparung (7) gestattet es, daß die Beweglichkeit auch bei unterschiedlichen Betriebsbedingungen erhalten bleibt, wobei das Spiel jedoch so gering zu wählen ist, daß im Dauerbetrieb keine Schäden auftreten.

Im Ergebnis ermöglicht es die Erfindung, die Verbindung zwischen einem Kolben und einer Pleuelstange wesentlich einfacher zu gestalten, so daß eine schnellere und preisgünstigere Fertigung erreichbar ist.

## Patentansprüche

1. Kolben, der in einem Arbeitszylinder axial beweglich ist, mit einer Pleuelstange, die senkrecht zur Achse des Arbeitszylinders drehbar am Kolben befestigt ist, wobei der Kolben (1) eine Aussparung (7) in Gestalt eines endseitig offenen, runden Hohlzylinders aufweist, dessen Zylinderachse senkrecht zur Bewegungsrichtung des Kolbens (1) ausgerichtet ist und der auf der der Pleuelstange (3) zugewandten Seite über einen axialen Spalt durchgehend offen ist, wobei der Durchmesser dieser Seitlichen Öffnung, d.h. die Spaltbreite, kleiner als der Durchmesser des Hohlzylinders ist,
die Pleuelstange (3) kolbenseitig in einem starr mit ihr verbundenen, runden Zylinder (6) endet, dessen Durchmesser zwischen dem Innendurchmesser des Hohlzylinders und dem Durchmesser seiner seitlichen Öffnung (8) liegt und der bei paralleler Ausrichtung der Zylinderachsen zueinander in diesen eingeschoben ist, wobei die Pleuelstange (3) die seitliche Öffnung (8) des Hohlzylinders durchgreift und der Durchmesser der Pleuelstange (3) im Anschluß an den runden Zylinder (6) kleiner als der Durchmesser der seitlichen Öffnung (8) des Hohlzylinders ist, **dadurch gekennzeichnet,** daß der Querschnitt von Kolben (1) und Arbeitszylinder (2) näherungsweise rechteckig ist.

2. Kolben nach Anspruch 1, **dadurch gekennzeichnet,** daß Kolben (1) und/oder Pleuelstange (3) aus Kunststoff, Metall und/oder einem keramischen Material bestehen.

3. Kolben nach einem der vorhergehenden Ansprüche, **dadurch gekennzeichnet,** daß die Ränder der Seitlichen Öffnung (8) senkrecht der Achse des Hohlzylinders durch eine Klammer verbunden sind.

4. Kolben nach einem der vorhergehenden Ansprüche, **dadurch gekennzeichnet**, daß die Kontaktfläche zwischen Kolben (1) und Pleuelstange (3) mit einem Gleitbelag versehen ist.

5. Kolben nach einem der vorhergehenden Ansprüche, **dadurch gekennzeichnet,** daß der Kolben (1) an der Kontaktfläche zur Wand des Arbeitszylinders (2) ein Gleitmaterial aufweist.

6. Verfahren zur Herstellung eines Kolbens mit Pleuelstange nach einem der vorhergehenden Ansprüche, **dadurch gekennzeichnet**, daß Kolben (1) und/oder Pleuelstange (3) durch Spritzgießen, Schmieden, Fließpressen, Stanzen oder Räumen mit einer Räumnadel ausgeformt werden.

## Claims

1. Piston, which is movable axially in a working cylinder, having a connecting rod, which perpendicularly to the axis of the working cylinder is affixed to the piston so as to be rotatable, piston (1) having a recess (7) in the form of an endwise-open, round, hollow cylinder, whose cylinder axis is aligned perpendicularly to the direction of the movement of piston (1) and which, on the side facing connecting rod (3), has a through opening via an axial gap, the diameter of the lateral opening, i.e. the gap width, being smaller than the diameter of the hollow cylinder, connecting rod (3) ends at the piston side in a round cylinder (6) that is connected rigidly to it, whose diameter falls between the interior diameter of the hollow cylinder and the diameter of its lateral opening (8) and which is pushed into the latter when the cylinder axes are aligned parallel to each other, connecting rod (3) penetrating lateral opening (8) of the hollow cylinder and the diameter of connecting rod (3) in contact with round cylinder (6) being smaller than the diameter of lateral opening (8) of the hollow cylinder, **wherein** the cross section of said piston (1) and said working cylinder (2) is approximately rectangular.

2. Piston according to claim 1, **wherein** said piston (1) and/or said connecting rod (3) consist of plastic, metal and/or a ceramic material.

3. Piston according to one of the proceeding claims, **wherein** the edges of said lateral opening (8) are connected by a clamp perpendicularly in respect of the axis of the hollow cylinder.

4. Piston according to one of the proceeding claims, **wherein** the contact surface between said piston (1) and said connecting rod (3) is provided with a slide lining.

5. Piston according to one of the preceding claims, **wherein** said piston (1) has a lubricant material on the contact surface to the wall of working cylinder (2).

6. Process for the manufacture of a piston with connecting rod according to one of the proceeding claims, **wherein** said piston (1) and/or said connecting rod (3) are formed by means of injection moulding, forging, extrusion, pressing or broaching with a broaching tool.

## Revendications

1. Piston, pouvant se déplacer dans le sens axial dans un cylindre de travail, doté d'une bielle fixée sur le piston perpendiculairement au cylindre, le piston (1) présentant un évidement (7) sous forme de cylindre cylindrique creux rond, ouvert à une extrémité, dont l'axe est perpendiculaire au sens de déplacement du piston (1) et pourvu d'une fente continue du côté opposé à la bielle (3), le diamètre de cette ouverture latérale, soit la largeur de la fente, étant inférieur au diamètre du cylindre creux,
la bielle (3) aboutissant du côté du piston dans un cylindre (6) auquel elle est reliée par un élément rigide, le diamètre de ce cylindre rond (6) étant situé entre le diamètre intérieur du cylindre creux et le diamètre de son ouverture latérale (8), et enfilé dans celui-ci, les axes des cylindres étant parallèles entre eux, la bielle (3) traversant l'ouverture latérale (8) du cylindre creux et le diamètre de la bielle (3) en aval du cylindre creux (6) étant inférieur au diamètre de l'ouverture latérale (8) du cylindre creux, **caractérisé en ce que** la section du piston (1) et du cylindre de travail (2) est pratiquement rectangulaire.

2. Piston selon la revendication 1, **caractérisé en ce que** le piston (1) et/ou la bielle (3) se compose de matière plastique, de métal et/ou d'une matière céramique.

3. Piston selon l'une des revendications précédentes, **caractérisé en ce que** les bords de l'ouverture latérale (8) sont reliés par une pince, perpendiculairement à l'axe du cylindre creux.

4. Piston selon l'une des revendications précédentes, **caractérisé en ce que** la surface de contact entre le piston (1) et la bielle (3) est pourvue d'un revêtement de glissière.

5. Piston selon l'une des revendications précédentes, **caractérisé en ce que** la surface de contact du piston (1), du côté de la paroi du cylindre de travail (2), est dotée d'un matériau de glissière.

6. Piston selon l'une des revendications précédentes, **caractérisé en ce que** le piston (1) et/ou la bielle (3) est formé(e) par moulage par injection, par fluage, par estampage ou par brochage à l'aide d'un outil de brochage.
